# EUROPEAN PATENT APPLICATION

(11) **EP 4 418 736 A1**
(43) Date of publication of application: **21.08.2024**
(21) Application number: 23220668.0
(22) Date of filing: 29.12.2023
(51) Int. Cl.: H04W 36/00

(54) **MEASUREMENTS WITH INTERRUPTIONS**

(30) Priority: 17.02.2023 FI 20235191
(71) Applicant: Nokia Technologies Oy, 02610 Espoo (FI)
(72) Inventor: CAUDURO DIAS DE PAIVA, Rafael, Aalborg (DK); RYSGAARD, Bent Henneberg, Aalborg (DK); HOFMANN, Jürgen, Merching (DE); DALSGAARD, Lars, Oulu (FI)
(74) Representative: Nokia EPO representatives

(57) **Abstract**

Embodiments of the present disclosure relate to the procedure for measurements without gaps and with interruptions as well as the related parameters. A terminal device determines at least one parameter of at least one interruption window, wherein an interruption of data communication between a network device and the terminal device is allowed to occur during the at least one interruption window. The terminal device performs one or more measurements during a measurement window associated with the at least one interruption window. It is possible to provide capabilities of the terminal device on interruptions.

## Description

### FIELD

Various example embodiments relate to the field of telecommunication and in particular, to a terminal device, a network device, methods, apparatuses and a computer readable storage medium for parameters for measurements with interruptions.

### BACKGROUND

In the communications area, there is a constant evolution ongoing in order to provide efficient and reliable solutions for utilizing wireless communication networks. Efforts have been made to develop an improved 5th generation (5G) or pre-6G communication system. Enhancements for User Equipments (UEs) to be able to perform measurements without gaps have been discussed. There are inter-frequency and intra-frequency measurements, with or without gaps. Measurements without gaps facilitate UEs to be scheduled by a base station (BS) while performing the measurements.

### SUMMARY

In general, example embodiments of the present disclosure provide a solution for the procedure for measurements without gaps and with interruptions.

In a first aspect, there is provided a terminal device. The terminal device comprises at least one processor and at least one memory storing instructions that, when executed by the at least one processor, cause the terminal device to determine at least one parameter of at least one interruption window, wherein an interruption of data communication between a network device and the terminal device is allowed to occur during the at least one interruption window; and perform one or more measurements during a measurement window associated with the at least one interruption window.

In a second aspect, there is provided a network device. The network device comprises at least one processor and at least one memory storing instructions that, when executed by the at least one processor, cause the network device to receive, from a terminal device, a first message comprising at least one parameter of at least one interruption window, wherein an interruption of data communication between the network device and the terminal device is allowed to occur during the at least one interruption window, and wherein the at least one parameter is determined by the terminal device.

In a third aspect, there is provided a method. The method comprises determining, by a terminal device, at least one parameter of at least one interruption window, wherein an interruption of data communication between a network device and the terminal device is allowed to occur during the at least one interruption window; and performing, by the terminal device, one or more measurements during a measurement window associated with the at least one interruption window.

In a fourth aspect, there is provided a method. The method comprises receiving, by a network device and from a terminal device, a first message comprising at least one parameter of at least one interruption window, wherein an interruption of data communication between the network device and the terminal device is allowed to occur during the at least one interruption window, and wherein the at least one parameter is determined by the terminal device.

In a fifth aspect, there is provided a non-transitory computer readable medium comprising program instructions that, when executed by an apparatus, cause the apparatus to perform at least the following: determining at least one parameter of at least one interruption window, wherein an interruption of data communication between a network device and the apparatus is allowed to occur during the at least one interruption window; and performing one or more measurements during a measurement window associated with the at least one interruption window.

In a sixth aspect, there is provided a non-transitory computer readable medium comprising program instructions that, when executed by an apparatus, cause the apparatus to perform at least the following: receiving, from a terminal device, a first message comprising at least one parameter of at least one interruption window, wherein an interruption of data communication between the apparatus and the terminal device is allowed to occur during the at least one interruption window, and wherein the at least one parameter is determined by the terminal device.

In a seventh aspect, there is provided an apparatus. The apparatus comprises means for determining at least one parameter of at least one interruption window, wherein an interruption of data communication between a network device and the apparatus is allowed to occur during the at least one interruption window; and means for performing one or more measurements during a measurement window associated with the at least one interruption window.

In an eighth aspect, there is provided an apparatus. The apparatus comprises means for receiving, from a terminal device, a first message comprising at least one parameter of at least one interruption window, wherein an interruption of data communication between the apparatus and the terminal device is allowed to occur during the at least one interruption window, and wherein the at least one parameter is determined by the terminal device.

In a ninth aspect, there is provided a computer program comprising instructions that, when executed by an apparatus, cause the apparatus to perform at least the following: determining at least one parameter of at least one interruption window, wherein an interruption of data communication between a network device and the apparatus is allowed to occur during the at least one interruption window; and performing one or more measurements during a measurement window associated with the at least one interruption window.

In a tenth aspect, there is provided a computer program comprising instructions that, when executed by an apparatus, cause the apparatus to perform at least the following: receiving, from a terminal device, a first message comprising at least one parameter of at least one interruption window, wherein an interruption of data communication between the apparatus and the terminal device is allowed to occur during the at least one interruption window, and wherein the at least one parameter is determined by the terminal device.

In an eleventh aspect, there is provided a terminal device. The terminal device comprises determining circuitry configured to determine at least one parameter of at least one interruption window, wherein an interruption of data communication between a network device and the terminal device is allowed to occur during the at least one interruption window; and performing circuitry configured to perform one or more measurements during a measurement window associated with the at least one interruption window.

In a twelfth aspect, there is provided a network device. The network device comprises receiving circuitry configured to receive, from a terminal device, a first message comprising at least one parameter of at least one interruption window, wherein an interruption of data communication between the network device and the terminal device is allowed to occur during the at least one interruption window, and wherein the at least one parameter is determined by the terminal device.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
Fig. 1 illustrates an example communication network in which embodiments of the present disclosure may be implemented;
Fig. 2 illustrates a flowchart illustrating a process for measurements with interruptions according to some embodiments of the present disclosure;
Fig. 3 illustrates a flowchart illustrating a process for measurements with interruptions according to some other embodiments of the present disclosure;
Fig. 4 illustrates an example of parameters and the interruption windows according to some other embodiments of the present disclosure;
Fig. 5 illustrates another example of parameters and the interruption windows according to some other embodiments of the present disclosure;
Fig. 6 illustrates an example of parameters in same units according to some embodiments of the present disclosure;
Fig. 7 illustrates another example of parameters in different units according to some embodiments of the present disclosure;
Fig. 8 illustrates a flowchart of a method implemented at a terminal device according to some embodiments of the present disclosure;
Fig. 9 illustrates a flowchart of a method implemented at a network device according to some embodiments of the present disclosure;
Fig. 10 illustrates a simplified block diagram of an apparatus that is suitable for implementing embodiments of the present disclosure; and

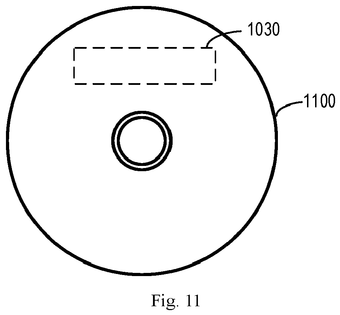

FIG. 11 illustrates a block diagram of an example computer readable medium in accordance with some embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

One of the enablers for the UE to support measurements without gaps is that it may have an available receiver that is not being used by other active secondary serving cells (SCells). This situation may arise when a UE is capable of receiving more component carriers than it is configured by the gNB. This situation may also arise for MUSIM operation, DC operation, etc. In this case, a vacant Rx chain can be used for performing measurements without impacting the operations in the active component carriers. Even though the impact of using a vacant Rx chain is minimized on the active component carriers, there may be still some interruptions caused by radio frequency (RF) retuning. For this reason, it is expected that certain UE architectures need to be allowed for some interruptions when performing measurements without gaps.

A similar approach was used for a network controlled small gap (NCSG), where a vacant RF chain is used for performing measurements, and a visible interruption is used for accommodating the interruptions due to RF retuning. Although the advantages of a vacant RF chain can already be used with a NCSG, it has a fixed configuration that leaves little room for some more flexibility that might be needed by certain UE implementations.

One of such problems that is identified in RAN4 is that some UE architectures might need some flexibility on where the interruptions are happening, and that such UE architecture would not be able to support NCSG. Thus, it is desired that the interruption location not to be specified and that a simple interruption ratio is used. However, allowing too much freedom on where the interruptions are located will result in unpredicted network performance.

When a UE is performing measurements without gaps using a vacant RF chain, the following procedure is expected to be followed:
- Initial condition: The UE has one vacant RF chain which can be used to perform a given measurement
- Step 1 - The UE calculates the start time of the measurement window Tstart
- Step 2 - Tdelay microseconds before the start of the measurement window, the UE activates the vacant RF chain
- Step 3 - The UE retunes/activates the vacant RF chain to the frequency where the measurement will be performed
   ∘ During this step an interruption is expected on none, one or more of the active RF chains
- Step 4 - The UE performs the measurement on the given frequency
- Step 5 - The UE disables the vacant RF chain
   ∘ During this step an interruption is expected on none, one or more of the active RF chains

The time delay for Tdelay will depend on the average time for activation/deactivation and/or retuning of the vacant chain as well as for some uncertainty associated with that time.

In view of the above, it is desired to provide both UE and network with a configuration that allows measurements without gaps but with some flexibility on where interruptions are allowed/located.

According to embodiments of the present disclosure, there is providing a solution for determining parameters for measurements with interruptions. A terminal device determines at least one parameter of at least one interruption window. An interruption of data communication between a network device and the terminal device is allowed to occur during the at least one interruption window. So that the interruption will not occur in a measurement window for the terminal device to perform the measurement(s). As such, there is some freedom for randomness in the location of the interruption within the window. In this way, it is possible to provide capabilities of the terminal device on interruptions.

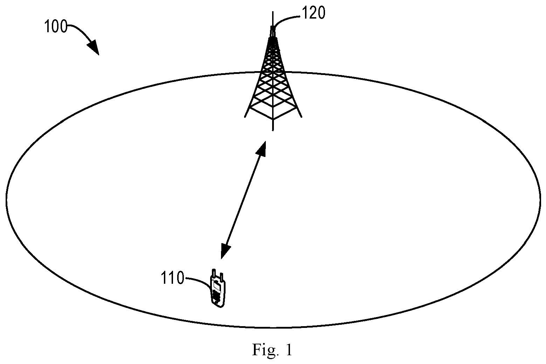

Principle and embodiments of the present disclosure will be described in detail below with reference to the accompanying drawings. Reference is first made to Fig. 1, which illustrates an example environment 100 in which example embodiments of the present disclosure can be implemented. The environment 100, which may be a part of a communication network, comprises a terminal device 110 and a network device 120 communicating with each other or with other devices via each other.

The communication environment 100 may comprise any suitable number of devices and cells. In the communication environment 100, the terminal device 110 and the network device 120 can communicate data and control information with each other. A link from the network device 120 to the terminal device 110 is referred to as a downlink (DL), while a link from the terminal device 110 to the network device 120 is referred to as an uplink (UL).

It is to be understood that two devices are shown in the environment 100 for the purpose of illustration, without suggesting any limitation to the scope of the present disclosure. In some example embodiments, the environment 100 may comprise a further device to communicate with the terminal device 110 and network device 120.

The communications in the environment 100 may follow any suitable communication standards or protocols comprising, but not limited to, Universal Mobile Telecommunications System (UMTS), long term evolution (LTE), LTE-Advanced (LTE-A), the fifth generation (5G) New Radio (NR), Wireless Fidelity (Wi-Fi), Worldwide Interoperability for Microwave Access (WiMAX) standards or other future wireless technologies, and employs any suitable communication technologies, including, for example, Multiple-Input Multiple-Output (MIMO), Orthogonal Frequency Division Multiplexing (OFDM), time division multiplexing (TDM), frequency division multiplexing (FDM), code division multiplexing (CDM), Bluetooth, ZigBee, and machine type communication (MTC), enhanced mobile broadband (eMBB), massive machine type communication (mMTC), ultra-reliable low latency communication (URLLC), Carrier Aggregation (CA), Dual Connectivity (DC), and New Radio Unlicensed (NR-U) technologies and/or any other technologies currently known or to be developed in the future.

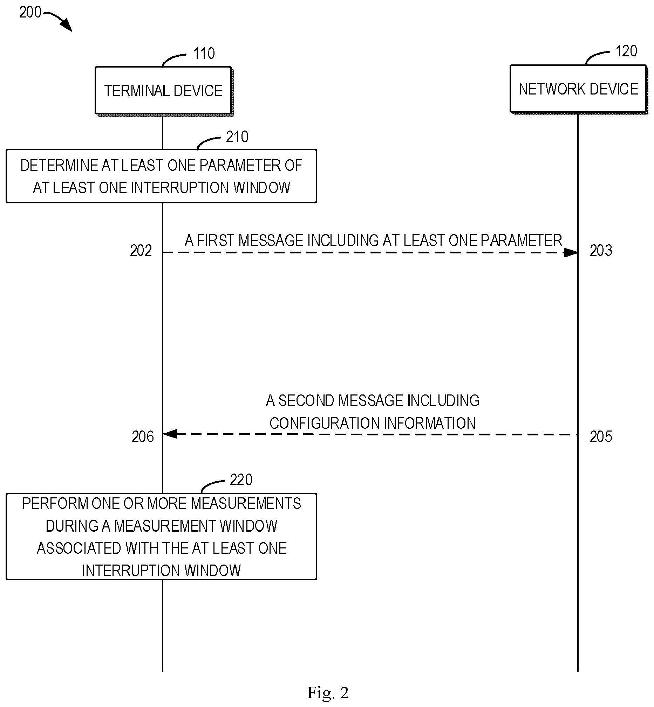

Reference is now made to Fig. 2, which shows a process 200 for measurements with interruptions according to some embodiments of the present disclosure. For the purpose of discussion, the process 200 will be described with reference to Fig. 1. The process 200 may involve the terminal device 110 and the network device 120 as illustrated in Fig. 1. It would be appreciated that although the process 200 for measurements with interruptions is described in the communication environment 100 of Fig. 1, this process may be likewise applied to other suitable communication scenarios. It would also be appreciated that although discussions are made with reference to agreed signaling between the terminal device 110 and the network device 120, a similar process can be applied for any other signaling standards that has been agreed or will be agreed in the future.

In the process 200, the terminal device 110 determines 210 at least one parameter of at least one interruption window. An interruption is allowed to occur during the interruption window, e.g. at a random location within the interruption window. There are three options for establishing the interruption window specifications:
- Configured by the network;
- Informed by the terminal device, implicitly configured by the terminal device itself; or
- the specification of the interruption windows specified in the specification (hard coded).

The interruption windows are associated with a measurement window. For example, the interruption windows may include a window before/after the measurement window. In the measurement window, the terminal device 110 performs 220 the measurement(s). In this way, it is possible to provide capabilities of the terminal device on interruptions, and then the network may have the possibility to configure new parameters for the interruption windows based on what the device offers/supports.

In some embodiments, the terminal device 110 may transmit 202 a first message including the parameter(s). In addition, the first message may further include at least one of an indication that the terminal device 110 requests no gap and an interruption with a measurement, or an indication that the terminal device 110 requests no gap, no NCSG, and an interruption with a measurement. The suggested solution may also be applied to MUSIM operation, where MUSIM operation without gaps may still cause interruptions. Alternatively or in addition, the first message may include at least one of a UE assistance information message or a message for reporting UE capability parameters.

The network device 120 may receive 203 the first message including parameter(s) of interruption window(s). In some embodiments, the network device 120 may configure one or more windows (e.g. a window length and a window location) in configuration information, based on the received parameter(s). In addition, one or more measurements at the terminal device 110 may also be configured in the configuration information. The network device 120 may then transmit 205 a second message including the configuration information to the terminal device 110.

The terminal device 110 may receive 206 the second message including the configuration information of the interruption window(s) or one or more measurements. In some embodiments, the configuration information may be included in a measurement configuration (MeasConfig) information element (IE). In some embodiments, the second message may include at least one of another RRC reconfiguration message or a message for transmitting the configuration information of the interruption window(s).

The signalling should be as flexible as possible to allow the terminal device 110 to report with the dependencies identified by the terminal device 110. In this way, it is possible for the network device to efficiently schedule resources around interruptions caused by the terminal device due to performing measurements.

In some embodiments, parameters may include at least one of the following: a location and/or a length of a pre-measurement interruption window (PrM-IW) before the measurement window, a location and/or a length of a post-measurement interruption window (PoM-IW) after the measurement window, a pre-measurement configuration offset (PrM-CO) between the PrM-IW and the measurement window, a post-measurement configuration offset (PoM-CO) between the measurement window and the PoM-IW, a pre-measurement visible interruption length (PrM-VIL); or a post-measurement visible interruption length (PoM-VIL).

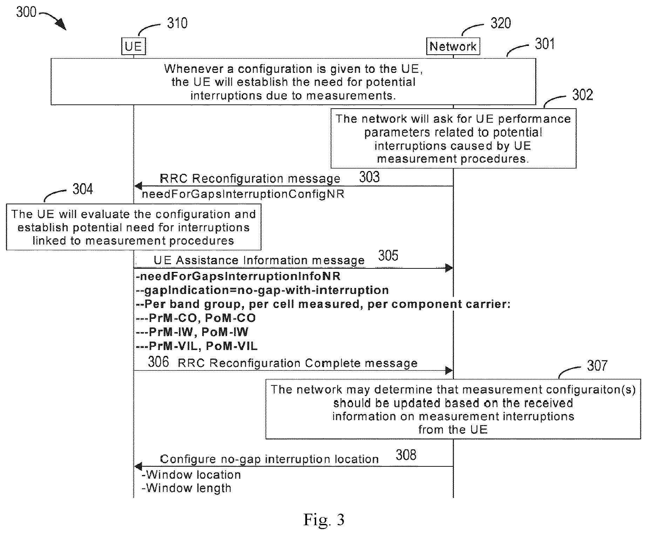

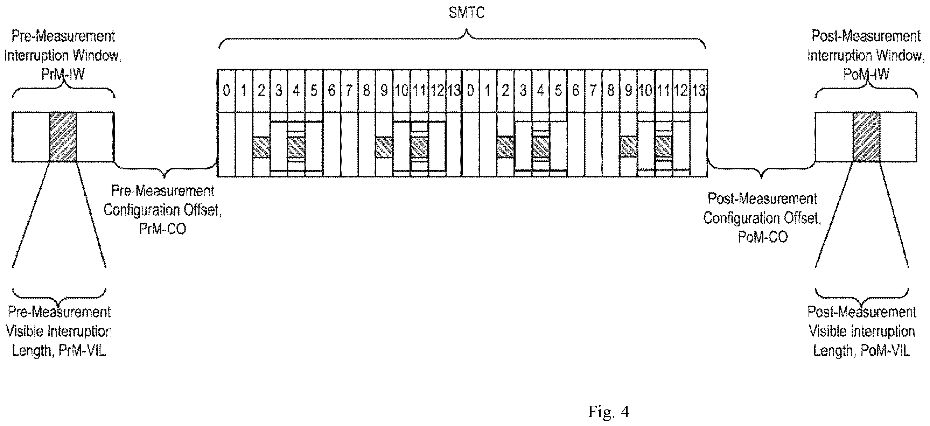

Hereinbefore, some embodiments are described related to reporting the interruption parameters. In the following, some further embodiments related to examples of interruption parameters will be described with reference to Figs. 4 to 7. After that, a more specific signaling example between a UE and a network will be detailed with reference back to Fig. 3. Fig. 4 illustrates an example of parameters of interruptions according to some other embodiments of the present disclosure. For the purpose of discussion, parameters of interruptions will be described with reference to Figs. 1 and 4.

In Fig. 4, a Synchronization Signal Block (SSB)-based Measurement Timing Configuration (SMTC) is an example measurement window. The SMTC is configured for SSB-based measurements without gaps that the terminal device 110 is to perform. The SMTC contains the reference signals to be measured. There are certain conditions under which the terminal device 110 is not required to receive PDCCH/PDSCH or transmit PUSCH and PUSCH during the SSB symbols and one OFDM symbol before and after the symbols to be measured.

Therefore, the interruption windows as described herein may be applied.

The PrM-IW is a window larger than the interruption wherein the Pre-Measurement Visible Interruption (PrM-VI) will occur. PoM-IW is a window larger than the interruption wherein the Post-Measurement Visible Interruption (PoM-VI) will occur. PrM-IW may be equal to PoM-IW and therefore only one of them may be given (common configuration can be used for both).

PrM-CO and PoM-CO are the potential time before and after the actual measurement occasion (e.g. SMTC) for the location of the PrM-IW. The configuration offset may be zero.

The PrM-VII, is the allowed length of the interruption caused by hardware (HW) reconfiguration prior to the actual measurement. If there is no uncertainty in the location of the PrM-VII, within the PrM-IW, the two parameters PrM-VIL and PrM-IW may be the same. However, the terminal device may require flexibility in the location of the PrM-VII, within the PrM-IW. The PoM-VII, serves the same purpose as PrM-VII, except it occurs after the measurement window.

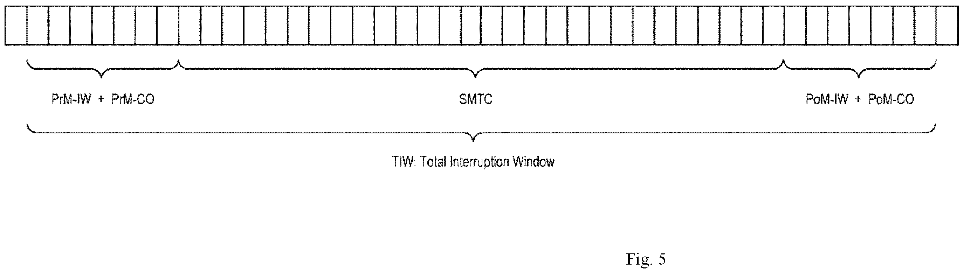

In some embodiments, the interruption windows and the measurement window may be included in a total interruption window (TIW). Fig. 5 illustrates another example of parameters and the interruption windows according to some other embodiments of the present disclosure. As shown in Fig. 5, the PrM-IW and PrM-CO may be combined into one. The same may be done with PoM-CO and PoM-IW.

The terminal device 110 may be allowed one or two visible interruptions (e.g. PrM-VI and/or PoM-VI) of a given defined length (e.g. a visible interruption length VIL) in relation to a given measurement occasion (e.g. SMTC). The terminal device 110 may be assigned a TIW within which the terminal device 110 is allowed for example no more than two interruptions of a maximum length (e.g. VIL). Alternatively, or in addition, the VIL is not defined but instead the terminal device 110 is allowed a maximum amount of dropped data within the TIW.

In this way, there is some freedom for randomness in the location of the interruption within the window.

In addition, there may be a new entry in the enumeration *gapIndication* above, extending to: ENUMERATED {gap, ncsg, nogap-noncsg, nogap-withinterruption, nogap-noncsg-withinterruption}. Even more may be identified, but the importance is that the terminal device 110 indicates the need for interruptions, even though actual measurement gaps are not needed.

In some embodiments, parameter(s) may be included in an IE which is defined for the parameter(s). Alternatively, parameter(s) may be included in an existing IE. Such examples are shown below, which impacts 38.321. Update of existing *needForGaps* information element or creation of new information element is necessary for the implementation of this method.

### Example 1

Existing IEs are updated with interruption location information for the UE assistance information (UAI) signaling where bolded text indicates new additions to the specification:

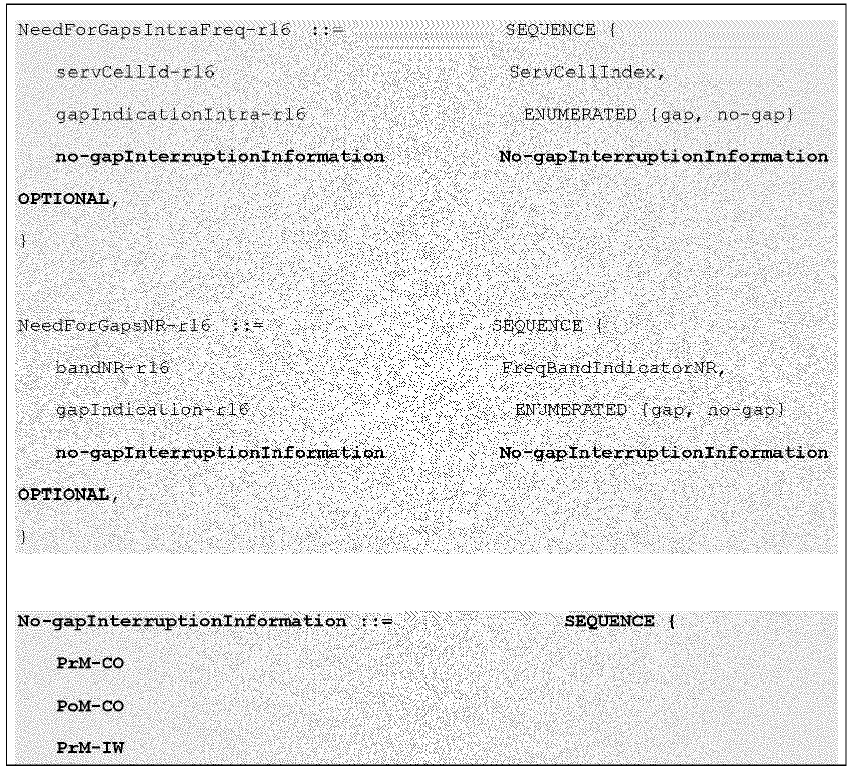

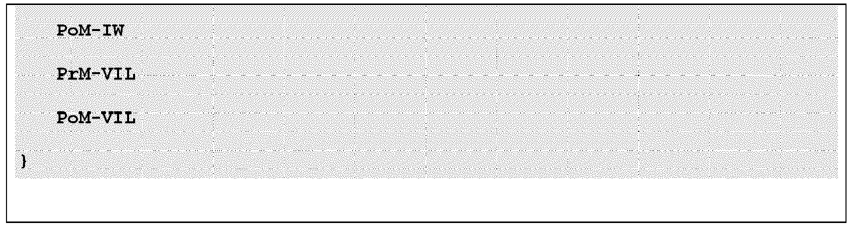

In this example, the presence of no-gapInterruptionInformation indicates that the UE is capable of measurements without gaps but interruption is needed, and no-gapInterruptionInformation provides the details of the interruption that are needed

### Example 2

new IEs are created with interruption location information for the UAI signaling where bold text indicates new additions to the specification:

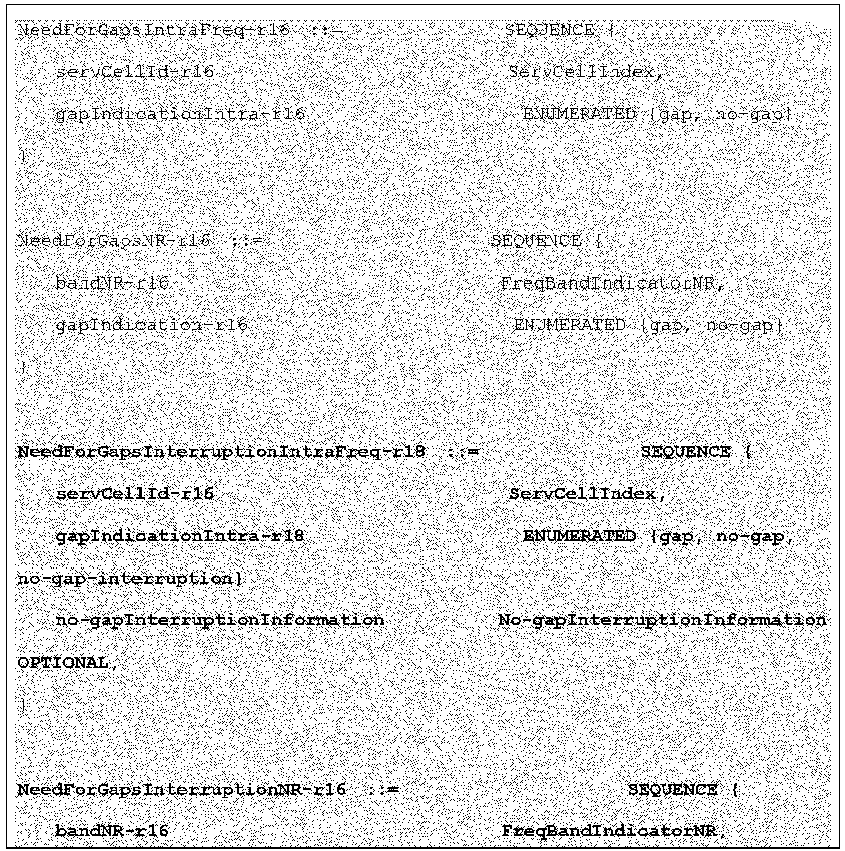

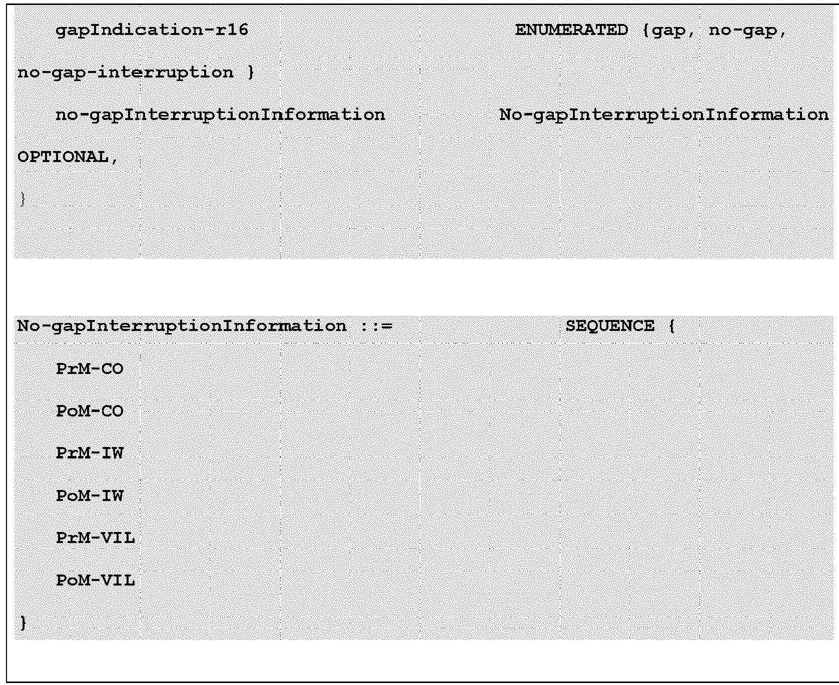

In this example, once the UE reports no-gap-interruption, it should also report the information about the interruption in No-gapInterruptionInformation.

In addition to the UAI, the response from the gNB needs to be included in an IE for configuring the UE interruption. One example of how to implement this would be as part of the MeasConfig IE, as shown below, where bold text indicates new additions to the specification:

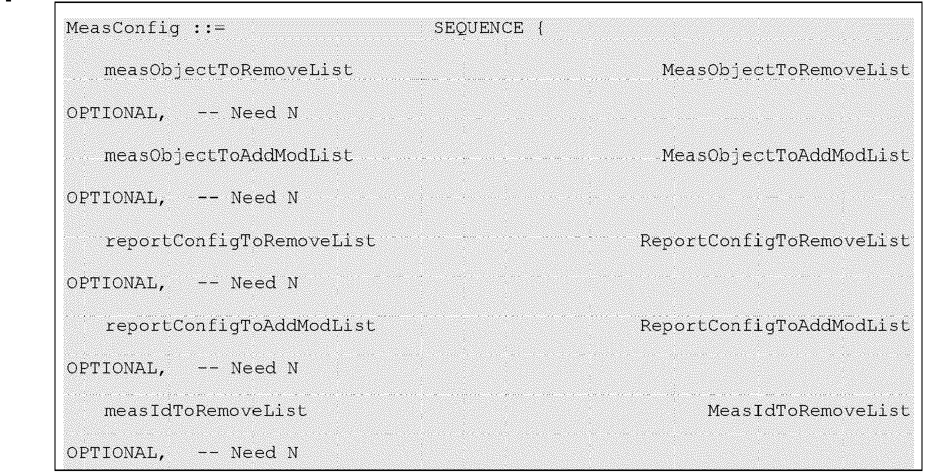

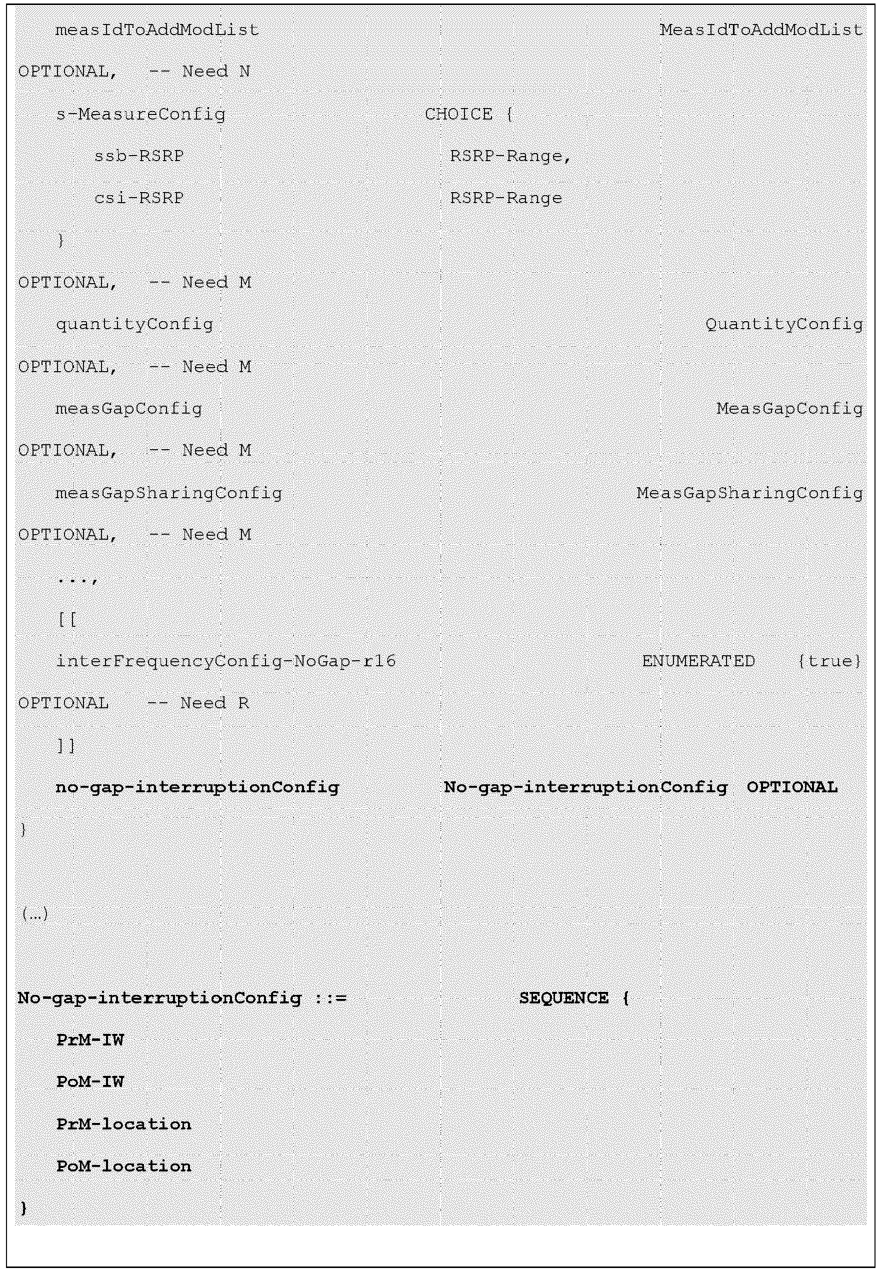

### Impact to 38.133

New clause is needed based on the NCSG clause in 9.1.9, where the UE behaviour during the pre-measurement and the post-measurement interruption window is described.

In some embodiments, the parameter(s) may be determined per band, per band group, per measured cell, or per component carrier, depending on the implementation of the terminal device 110. Further, the units of the parameters may be the same or may be different. That is, at least two of the PrM-IW, the PoM-IW, the PrM-VIL, the PoM-VIL, the PrM-CO, the PoM-CO, or the TIW are determined in a same unit or in different units. The different units may include at least one of the following: time units in millisecond or microsecond, symbols, slots, or number of missed acknowledgement (ACK) / negative acknowledgement (NACK) opportunities.

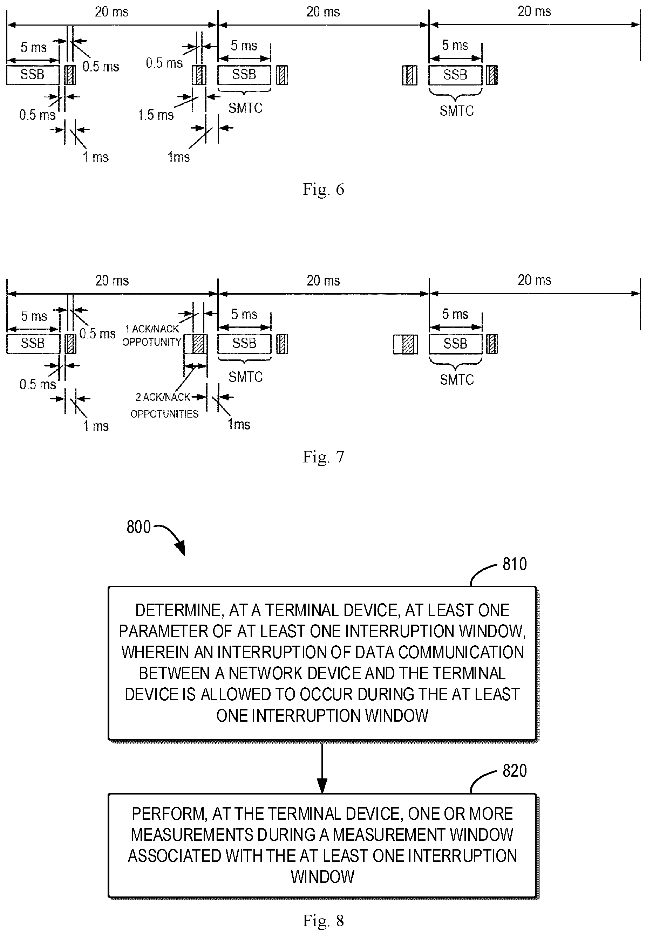

Fig. 6 illustrates an example of parameters in same units according to some embodiments of the present disclosure, and Fig. 7 illustrates another example of parameters in different units according to some embodiments of the present disclosure. In Fig. 6, the units of the parameters are given in time units of millisecond or microsecond. The values of the parameters used in the example of Fig. 6 are:
PrM-IW = 1.5 ms
PrM-VIL = 0.5ms
PrM-CO = 1ms
PoM-IW = 1ms
PoM-VIL = 0.5ms
PoM-CO = 0.5ms

In Fig. 7, the example focusses on number of ACK options affected. Moreover, the example gives the option to mix units. In the example of Fig. 7, the pre-measurement interruption is specified in number of ACK/NACK and the post measurement interruption is specified in time units of millisecond or microsecond. The values of the parameters used in the example of Fig. 7 are:
PrM-IW = 2 ACK / NACK opportunities
PrM-VIL = 1 ACK / NACK opportunity
PrM-CO = 1ms
PoM-IW = 1ms
PoM-VIL = 0.5ms
PoM-CO = 0.5ms

In this way, it is possible to select what type of channel/signals that are affected by interruptions or avoid impact, such as ACK/NACK, PDCCH vs PDSCH, etc.

Referring back to Fig. 3, which illustrates a flowchart illustrating a process 300 for measurements with interruptions according to some other embodiments of the present disclosure. It would be appreciated that the process 300 may be considered as an example of the process 200 as shown in Fig. 2. Accordingly, the UE 310 may be an example of the terminal device 110, and the network 320 may be an example of the network device 120.

In Fig. 3, at 301, when a configuration is given to the UE 310, the UE 310 may establish the need for potential interruption due to measurements. At 302, the network 320 may ask for UE performance parameters related to potential interruptions caused by UE measurement procedures. At 303, the network 320 may transmit an RRC reconfiguration message to the UE 310. So that the network 320 can ask for measurement interruption information from the UE 310.

At 304, the UE 310 may evaluate the configuration and establish potential need for interruptions related to measurement procedures. The UE 310 may provide the information by adding parameters of the interruption windows to the existing parameters in the NeedForGapsInfoNR IE. Then at 305, the UE 310 may transmit UE Assistance Information message to the network 320. It should be noted that a good UE implementation would select the windows for the interruption, so that there is the least impact on performance, for example, not doing the interruption at locations of PDCCH vs PDSCH.

The network may decide to reconfigure the measurements based on knowledge of interruptions caused by measurement setup. This may be in a new message or by issuing a new RRC reconfiguration message. The message may also give the UE a selection of interruption options and the UE can then decide which one to use. Upon receipt of an RRC Reconfiguration Complete message sent from the UE 310 at 306, the network 320 may determine 307 that measurement configuration(s) should be updated based on the received information on measurement interruptions from the UE 310. At 308, the network 320 may transmit a configuration information indicative of a window location and a window length, to configure no-gap interruption location.

In this way, it is possible to allow the UE 310 to select periods without, for example, PDCCH vs PDSCH reception. The impact of interrupting a PDCCH reception will have a higher impact than an interruption while receiving PDSCH.

Fig. 8 illustrates a flowchart of a method 800 implemented at a terminal device according to some embodiments of the present disclosure. For the purpose of discussion, the method 800 will be described from the perspective of the terminal device 110 with reference to Fig. 1.

At block 810, the terminal device 110 determines at least one parameter of at least one interruption window, wherein an interruption of data communication between a network device 120 and the terminal device is allowed to occur during the at least one interruption window. At block 820, the terminal device 110 performs one or more measurements during a measurement window associated with the at least one interruption window.

In some embodiments, the at least one parameter comprises at least one of the following: a location and/or a length of a pre-measurement interruption window before the measurement window; a location and/or a length of a post-measurement interruption window after the measurement window; a pre-measurement offset between the pre-measurement interruption window and the measurement window; or a post-measurement offset between the measurement window and the post-measurement interruption window.

In some embodiments, the at least one parameter further comprises at least one of the following: a pre-measurement interruption length; or a post-measurement interruption length.

In some embodiments, the at least one parameter further comprises a maximum amount of dropped data that the terminal device is allowed within the at least one interruption window.

In some embodiments, the at least one interruption window and the measurement window are comprised in a total interruption window.

In some embodiments, the terminal device 110 transmits a first message comprising the at least one parameter to the network device 120.

In some embodiments, the terminal device 110 receives from the network device 120 a second message comprising configuration information of the at least one interruption window or the one or more measurements.

In some embodiments, the configuration information is comprised in a measurement configuration (MeasConfig) information element (IE).

In some embodiments, the at least one parameter is determined per band, per band group, per measured cell, or per component carrier.

In some embodiments, the first message further comprises at least one of the following: an indication that the terminal device 110 requests no gap and an interruption with a measurement; or an indication that the terminal device 110 requests no gap, no network controlled small gap (NCSG), and an interruption with a measurement.

In some embodiments, the first message comprises at least one of a user equipment (UE) assistance information message or a message for reporting UE capability parameters; or the second message comprises at least one of another RRC reconfiguration message or a message for transmitting the configuration information of the at least one interruption window.

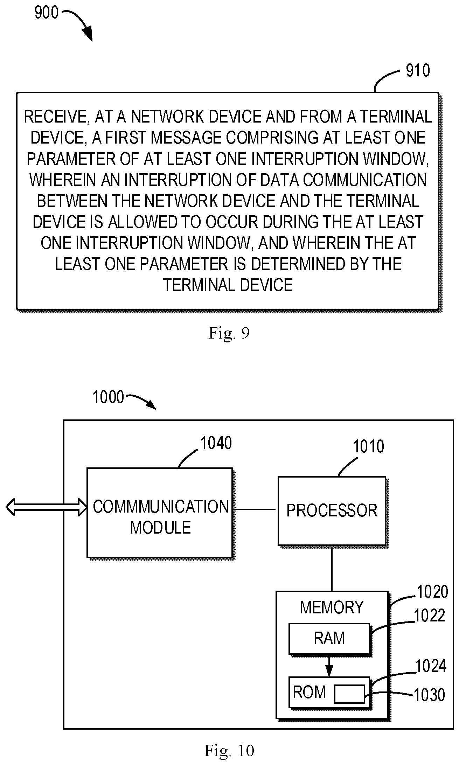

Fig. 9 illustrates a flowchart of a method 900 implemented at a network device according to some embodiments of the present disclosure. For the purpose of discussion, the method 900 will be described from the perspective of the network device 120 with reference to Fig. 1.

At block 910, the network device 120 receive a first message comprising at least one parameter of at least one interruption window from a terminal device 110, wherein an interruption of data communication between the network device 120 and the terminal device 110 is allowed to occur during the at least one interruption window, and wherein the at least one parameter is determined by the terminal device 110.

In some embodiments, the network device 120 transmit, to the terminal device 110, a second message comprising configuration information indicating at least one of: at least one interruption window; or one or more measurements at the terminal device within a measurement window associated with the at least one interruption window.

In some embodiments, the at least one parameter comprises at least one of the following: a location and/or a length of a pre-measurement interruption window before the measurement window; a location and/or a length of a post-measurement interruption window after the measurement window; a pre-measurement offset between the pre-measurement interruption window and the measurement window; or a post-measurement offset between the measurement window and the post-measurement interruption window.

In some embodiments, the at least one parameter further comprises at least one of the following: a pre-measurement interruption length; or a post-measurement interruption length.

In some embodiments, the at least one parameter further comprises a maximum amount of dropped data that the terminal device is allowed within the at least one interruption window.

In some embodiments, the at least one interruption window and the measurement window are comprised in a total interruption window.

In some embodiments, the configuration information is comprised in a measurement configuration (MeasConfig) information element (IE).

In some embodiments, the at least one parameter is determined per band, per band group, per measured cell, or per component carrier.

In some embodiments, the first message further comprises at least one of the following: an indication that the terminal device 110 requests no gap and an interruption with a measurement; or an indication that the terminal device 110 requests no gap, no network controlled small gap (NCSG), and an interruption with a measurement.

In some embodiments, the first message comprises at least one of a user equipment (UE) assistance information message or a message for reporting UE capability parameters; or the second message comprises at least one of another RRC reconfiguration message or a message for transmitting the configuration information of the at least one interruption window.

In some embodiments, an apparatus capable of performing the method 800 (for example, the terminal device 110) may comprise means for performing the respective steps of the method 800. The means may be implemented in any suitable form. For example, the means may be implemented in a circuitry or software module.

In some embodiments, the apparatus comprises means for determining at least one parameter of at least one interruption window, wherein an interruption of data communication between a network device and the apparatus is allowed to occur during the at least one interruption window; and means for performing one or more measurements during a measurement window associated with the at least one interruption window.

In some embodiments, the at least one parameter comprises at least one of the following: a location and/or a length of a pre-measurement interruption window before the measurement window; a location and/or a length of a post-measurement interruption window after the measurement window; a pre-measurement offset between the pre-measurement interruption window and the measurement window; or a post-measurement offset between the measurement window and the post-measurement interruption window.

In some embodiments, the at least one parameter further comprises at least one of the following: a pre-measurement interruption length; or a post-measurement interruption length.

In some embodiments, the at least one parameter further comprises a maximum amount of dropped data that the terminal device is allowed within the at least one interruption window.

In some embodiments, the at least one interruption window and the measurement window are comprised in a total interruption window.

In some embodiments, the apparatus further comprises means for transmitting a first message comprising the at least one parameter to the network device.

In some embodiments, the apparatus further comprises means for receiving from the network device a second message comprising configuration information of the at least one interruption window or the one or more measurements.

In some embodiments, the configuration information is comprised in a measurement configuration (MeasConfig) information element (IE).

In some embodiments, the at least one parameter is determined per band, per band group, per measured cell, or per component carrier.

In some embodiments, the first message further comprises at least one of the following: an indication that the apparatus requests no gap and an interruption with a measurement; or an indication that the apparatus requests no gap, no network controlled small gap (NCSG), and an interruption with a measurement.

In some embodiments, the first message comprises at least one of a user equipment (UE) assistance information message or a message for reporting UE capability parameters; or the second message comprises at least one of another RRC reconfiguration message or a message for transmitting the configuration information of the at least one interruption window.

In some embodiments, the apparatus further comprises means for performing other steps in some embodiments of the method 800. In some embodiments, the means comprises at least one processor and at least one memory including computer program code, the at least one memory and computer program code configured to, with the at least one processor, cause the performance of the apparatus.

In some embodiments, an apparatus capable of performing the method 900 (for example, the network device 120) may comprise means for performing the respective steps of the method 900. The means may be implemented in any suitable form. For example, the means may be implemented in a circuitry or software module.

In some embodiments, the apparatus comprises means for receiving a first message comprising at least one parameter of at least one interruption window from a terminal device, wherein an interruption of data communication between the apparatus and the terminal device is allowed to occur during the at least one interruption window, and wherein the at least one parameter is determined by the terminal device.

In some embodiments, the apparatus comprises means for transmitting, to the terminal device, a second message comprising configuration information indicating at least one of: at least one interruption window; or one or more measurements at the terminal device within a measurement window associated with the at least one interruption window.

In some embodiments, the at least one parameter comprises at least one of the following: a location and/or a length of a pre-measurement interruption window before the measurement window; a location and/or a length of a post-measurement interruption window after the measurement window; a pre-measurement offset between the pre-measurement interruption window and the measurement window; or a post-measurement offset between the measurement window and the post-measurement interruption window.

In some embodiments, the at least one parameter further comprises at least one of the following: a pre-measurement interruption length; or a post-measurement interruption length.

In some embodiments, the at least one parameter further comprises a maximum amount of dropped data that the terminal device is allowed within the at least one interruption window.

In some embodiments, the at least one interruption window and the measurement window are comprised in a total interruption window.

In some embodiments, the configuration information is comprised in a measurement configuration (MeasConfig) information element (IE).

In some embodiments, the at least one parameter is determined per band, per band group, per measured cell, or per component carrier.

In some embodiments, the first message further comprises at least one of the following: an indication that the terminal device requests no gap and an interruption with a measurement; or an indication that the terminal device requests no gap, no network controlled small gap (NCSG), and an interruption with a measurement.

In some embodiments, the first message comprises at least one of a user equipment (UE) assistance information message or a message for reporting UE capability parameters; or the second message comprises at least one of another RRC reconfiguration message or a message for transmitting the configuration information of the at least one interruption window.

In some embodiments, the apparatus further comprises means for performing other steps in some embodiments of the method 900. In some embodiments, the means comprises at least one processor and at least one memory including computer program code, the at least one memory and computer program code configured to, with the at least one processor, cause the performance of the apparatus.

In some embodiments, an apparatus comprises at least one processor; and at least one memory storing instructions that, when executed by the at least one processor, cause the apparatus at least to: determine at least one parameter of at least one interruption window, wherein an interruption of data communication between a network device and the apparatus is allowed to occur during the at least one interruption window; and perform one or more measurements during a measurement window associated with the at least one interruption window.

In some embodiments, the at least one parameter comprises at least one of the following: a location and/or a length of a pre-measurement interruption window before the measurement window; a location and/or a length of a post-measurement interruption window after the measurement window; a pre-measurement offset between the pre-measurement interruption window and the measurement window; or a post-measurement offset between the measurement window and the post-measurement interruption window.

In some embodiments, the at least one parameter further comprises at least one of the following: a pre-measurement interruption length; or a post-measurement interruption length.

In some embodiments, the at least one parameter further comprises a maximum amount of dropped data that the terminal device is allowed within the at least one interruption window.

In some embodiments, the at least one interruption window and the measurement window are comprised in a total interruption window.

In some embodiments, the apparatus is further caused to transmit a first message comprising the at least one parameter to the network device.

In some embodiments, the apparatus is further caused to receive from the network device a second message comprising configuration information of the at least one interruption window or the one or more measurements.

In some embodiments, the configuration information is comprised in a measurement configuration (MeasConfig) information element (IE).

In some embodiments, the at least one parameter is determined per band, per band group, per measured cell, or per component carrier.

In some embodiments, the first message further comprises at least one of the following: an indication that the apparatus requests no gap and an interruption with a measurement; or an indication that the apparatus requests no gap, no network controlled small gap (NCSG), and an interruption with a measurement.

In some embodiments, the first message comprises at least one of a user equipment (UE) assistance information message or a message for reporting UE capability parameters; or the second message comprises at least one of another RRC reconfiguration message or a message for transmitting the configuration information of the at least one interruption window.

In some embodiments, an apparatus comprises at least one processor; and at least one memory storing instructions that, when executed by the at least one processor, cause the apparatus at least to: receive a first message comprising at least one parameter of at least one interruption window from a terminal device, wherein an interruption of data communication between the apparatus and the terminal device is allowed to occur during the at least one interruption window, and wherein the at least one parameter is determined by the terminal device.

In some embodiments, the apparatus is further caused to transmit, to the terminal device, a second message comprising configuration information indicating at least one of: at least one interruption window; or one or more measurements at the terminal device within a measurement window associated with the at least one interruption window.

In some embodiments, the at least one parameter comprises at least one of the following: a location and/or a length of a pre-measurement interruption window before the measurement window; a location and/or a length of a post-measurement interruption window after the measurement window; a pre-measurement offset between the pre-measurement interruption window and the measurement window; or a post-measurement offset between the measurement window and the post-measurement interruption window.

In some embodiments, the at least one parameter further comprises at least one of the following: a pre-measurement interruption length; or a post-measurement interruption length.

In some embodiments, the at least one parameter further comprises a maximum amount of dropped data that the terminal device is allowed within the at least one interruption window.

In some embodiments, the at least one interruption window and the measurement window are comprised in a total interruption window.

In some embodiments, the configuration information is comprised in a measurement configuration (MeasConfig) information element (IE).

In some embodiments, the at least one parameter is determined per band, per band group, per measured cell, or per component carrier.

In some embodiments, the first message further comprises at least one of the following: an indication that the terminal device requests no gap and an interruption with a measurement; or an indication that the terminal device requests no gap, no network controlled small gap (NCSG), and an interruption with a measurement.

In some embodiments, the first message comprises at least one of a user equipment (UE) assistance information message or a message for reporting UE capability parameters; or the second message comprises at least one of another RRC reconfiguration message or a message for transmitting the configuration information of the at least one interruption window.

FIG. 10 is a simplified block diagram of a device 1000 that is suitable for implementing embodiments of the present disclosure. The device 1000 may be provided to implement the communication device, for example the terminal device 110, or the network device 120 as shown in Fig. 1. As shown, the device 1000 includes one or more processors 1010, one or more memories 1020 coupled to the processor 1010, and one or more communication modules 1040 coupled to the processor 1010.

The communication module 1040 is for bidirectional communications. The communication module 1040 has at least one antenna to facilitate communication. The communication interface may represent any interface that is necessary for communication with other network elements.

The processor 1010 may be of any type suitable to the local technical network and may include one or more of the following: general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

The memory 1020 may include one or more non-volatile memories and one or more volatile memories. Examples of the non-volatile memories include, but are not limited to, a Read Only Memory (ROM) 1024, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1022 and other volatile memories that will not last in the power-down duration.

A computer program 1030 includes computer executable instructions that are executed by the associated processor 1010. The program 1030 may be stored in the ROM 1020. The processor 1010 may perform any suitable actions and processing by loading the program 1030 into the RAM 1020.

The embodiments of the present disclosure may be implemented by means of the program 1030 so that the device 1000 may perform any process of the disclosure as discussed with reference to Figs. 2 to 9. The embodiments of the present disclosure may also be implemented by hardware or by a combination of software and hardware.

In some embodiments, the program 1030 may be tangibly contained in a computer readable medium which may be included in the device 1000 (such as in the memory 1020) or other storage devices that are accessible by the device 1000. The device 1000 may load the program 1030 from the computer readable medium to the RAM 1022 for execution. The computer readable medium may include any types of tangible non-volatile storage, such as ROM, EPROM, a flash memory, a hard disk, CD, DVD, and the like. Fig. 7 shows an example of the computer readable medium 700 in form of CD or DVD. The computer readable medium has the program 1030 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 600 as described above with reference to Figs. 2-9. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising:
means for determining at least one parameter of at least one interruption window, wherein an interruption of data communication between a network device and the apparatus is allowed to occur during the at least one interruption window; and
means for performing one or more measurements during a measurement window associated with the at least one interruption window.

2. The apparatus of claim 1, wherein the at least one parameter comprises at least one of the following:
a location and/or a length of a pre-measurement interruption window before the measurement window;
a location and/or a length of a post-measurement interruption window after the measurement window;
a pre-measurement offset between the pre-measurement interruption window and the measurement window; or
a post-measurement offset between the measurement window and the post-measurement interruption window.

3. The apparatus of any of claims 1-2, wherein the at least one parameter further comprises at least one of the following:
a pre-measurement interruption length; or
a post-measurement interruption length.

4. The apparatus of any of claims 1-2, wherein the at least one parameter further comprises a maximum amount of dropped data that the apparatus is allowed within the at least one interruption window.

5. The apparatus of any of claims 1-4, wherein the at least one interruption window and the measurement window are comprised in a total interruption window.

6. The apparatus of any of claims 1-5, further comprising:
means for transmitting, to the network device, a first message comprising the at least one parameter.

7. The apparatus of any of claims 1-6, further comprising:
means for receiving, from the network device, a second message comprising configuration information of the at least one interruption window or the one or more measurements.

8. The apparatus of claim 7, wherein the configuration information is comprised in a measurement configuration information element.

9. The apparatus of any of claims 1-8, wherein the at least one parameter is determined per band, per band group, per measured cell, or per component carrier.

10. The apparatus of any of claims 1-9, wherein the first message further comprises at least one of the following:
an indication that the apparatus requests no gap and an interruption with a measurement; or
an indication that the apparatus requests no gap, no network controlled small gap, and an interruption with a measurement.

11. The apparatus of any of claims 1-10, wherein at least one of the following:
the first message comprises at least one of a user equipment, UE, assistance information message or a message for reporting UE capability parameters; or
the second message comprises at least one of another RRC reconfiguration message or a message for transmitting the configuration information of the at least one interruption window.

12. An apparatus comprising:
means for receiving, from a terminal device, a first message comprising at least one parameter of at least one interruption window, wherein an interruption of data communication between the apparatus and the terminal device is allowed to occur during the at least one interruption window, and wherein the at least one parameter is determined by the terminal device.

13. The apparatus of claims 12, further comprising:
means for transmitting, to the terminal device, a second message comprising configuration information indicating at least one of:
at least one interruption window; or
one or more measurements at the terminal device within a measurement window associated with the at least one interruption window.

14. A method comprising:
determining, by a terminal device, at least one parameter of at least one interruption window, wherein an interruption of data communication between a network device and the terminal device is allowed to occur during the at least one interruption window; and
performing, by the terminal device, one or more measurements during a measurement window associated with the at least one interruption window.

15. A method comprising:
receiving, by a network device and from a terminal device, a first message comprising at least one parameter of at least one interruption window, wherein an interruption of data communication between the network device and the terminal device is allowed to occur during the at least one interruption window, and wherein the at least one parameter is determined by the terminal device.
